# EUROPÄISCHE PATENTSCHRIFT

(11) **EP 4 325 608 B1**
(45) Veröffentlichungstag und Bekanntmachung des Hinweises auf die Patenterteilung: **02.04.2025**
(21) Anmeldenummer: 23190666.0
(22) Anmeldetag: 09.08.2023
(51) Int. Cl.: H01M 8/04029, H01M 8/04701

(54) **KÜHLSYSTEM UND VERFAHREN ZUM BETREIBEN EINES KÜHLSYSTEMS FÜR WENIGSTENS EINE KOMPONENTE EINES BRENNSTOFFZELLENSYSTEMS**
COOLING SYSTEM AND METHOD FOR OPERATING A COOLING SYSTEM FOR AT LEAST ONE COMPONENT OF A FUEL CELL SYSTEM
SYSTÈME DE REFROIDISSEMENT ET PROCÉDÉ DE FONCTIONNEMENT D'UN SYSTÈME DE REFROIDISSEMENT POUR AU MOINS UN COMPOSANT D'UN SYSTÈME DE PILE À COMBUSTIBLE

(30) Priorität: 18.08.2022 DE 102022120860
(43) Veröffentlichungstag der Anmeldung: 21.02.2024
(73) Patentinhaber: Diehl Aviation Gilching GmbH, 82205 Gilching (DE)
(72) Erfinder: Jahn, Alexander, 01445 Radebeul (DE); Zerbes, Ingo, 81739 München (DE)
(74) Vertreter: Diehl Patentabteilung

(56) Entgegenhaltungen:
- JP-A- 2005 155 586
- US-A1- 2007 029 123

## Beschreibung

Die vorliegende Erfindung betrifft ein Kühlsystem für wenigstens eine Komponente, insbesondere die Brennstoffzelle, eines Brennstoffzellensystems, Brennstoffzellensysteme mit solchen Kühlsystemen, ein Verfahren zum Betreiben eines Kühlsystems für wenigstens eine Komponente, insbesondere die Brennstoffzelle, eines Brennstoffzellensystems, und Verfahren zum Betreiben eines Brennstoffzellensystems mit solchen Betriebsverfahren von Kühlsystemen.

Brennstoffzellen können in Fahrzeugen eine Vielzahl von unterschiedlichen Aufgaben erfüllen, wie beispielsweise die Stromversorgung eines elektrischen Netzwerks oder eines Elektromotors, wobei Brennstoffzellen insbesondere auch in Flugzeuge eingesetzt werden. Den Brennstoffzellen werden üblicherweise ein Brennstoff und ein Oxidationsmittel zugeführt, woraus dann ein Strom entsteht. Da bei dieser Stromerzeugung in der Brennstoffzelle in der Regel auch Wärme entsteht, ist die Brennstoffzelle üblicherweise mit einem Wärmetauscher ausgestattet, der an ein Kühlsystem gekoppelt ist. Insbesondere bei der Anwendung in Flugzeugen ist aber häufig auch eine spezielle Temperierung der Brennstoffzelle erforderlich. Da die Reaktivität der Brennstoffzelle bei niedrigen Temperaturen (z.B. <60°C) deutlich abnimmt, soll die Temperatur der Brennstoffzelle zum Beispiel beim Kaltstart möglichst schnell erhöht werden, um zeitnah viel Leistung über die Brennstoffzelle bereitstellen zu können, weshalb bei herkömmlichen Brennstoffzellensystemen häufig zusätzliche Wärmequellen für die Erwärmung der Brennstoffzellen vorhanden sind. Falls für die Brennstoffzelle zum Beispiel Wasserstoff als Brennstoff genutzt wird, muss der in flüssiger Form in einem Tank gespeicherte Wasserstoff für die Reaktion in der Brennstoffzelle zunächst verdampft werden, wozu der Wasserstoffverdampfer ebenfalls mit einem an ein Kühlsystem angekoppelten Wärmetauscher ausgestattet ist. Allerdings muss der Wasserstoff vorsorglich auf ein erhöhtes Temperaturniveau (z.B. >0°C) gebracht werden, um ein Einfrieren des Wassers in der Brennstoffzelle zu unterbinden und so eine Beschädigung der Brennstoffzelle zu verhindern, weshalb bei herkömmlichen Brennstoffzellensystemen häufig auch zusätzliche Wärmequellen für die Erwärmung des Wasserstoffverdampfers vorhanden sind. Dieser Einsatz von zusätzlichen Wärmequellen für die Erwärmungen der Brennstoffzellen und des Wasserstoffverdampfers erfordert eine größere Anzahl an Komponenten und verursacht damit größere Aufwände und Kosten für die Produktion und die Funktionalitätssicherung des Brennstoffzellensystems und auch größere Bauraumbedarfe und Gesamtgewichte des Brennstoffzellensystems.

US 2007/029123 offenbart, den Inverter eines durch Brennstoffzellen angetriebenen Fahrzeugmotors zu steuern um Abwärme zum Erwärmen der Kühlflüssigkeit zu generieren.

Es ist deshalb die Aufgabe der Erfindung, eine verbesserte Maßnahme für Brennstoffzellensysteme zu schaffen, mit der bei Bedarf eine Erwärmung von Komponenten des Brennstoffzellensystems, deren Wärmetauscher an Kühlsysteme gekoppelt sind, möglich ist.

Diese Aufgabe wird gemäß der Erfindung gelöst durch die in den unabhängigen Ansprüchen 1 und 8 definierten Erfindungsgegenstände. Einige vorteilhafte Ausgestaltungen und Weiterbildungen der Erfindung sind Gegenstand der abhängigen Ansprüche.

Gemäß einem ersten Aspekt der Erfindung weist das Kühlsystem für wenigstens eine mit einem Wärmetauscher ausgestattete Komponente eines Brennstoffzellensystems eine Kälteanlage; einen Thermofluidkreislauf, der einerseits mit einem Thermofluideinlass und einem Thermofluidauslass des Wärmetauschers der jeweiligen Komponente des Brennstoffzellensystems verbunden ist und andererseits mit einem Wärmeübertrager der Kälteanlage verbunden ist; eine Pumpe in dem Thermofluidkreislauf zum Fördern eines Thermofluids durch den Wärmetauscher der jeweiligen Komponente des Brennstoffzellensystems und durch den Wärmeübertrager der Kälteanlage; und eine Steuerung zum Ansteuern der Pumpe des Thermofluidkreislaufs auf. Gemäß der Erfindung ist die Steuerung für die Pumpe derart konfiguriert, dass sie eine thermische Verlustleistung der Pumpe variieren kann, um bei Bedarf eines erhöhten Temperaturniveaus der jeweiligen Komponente des Brennstoffzellensystems die Temperatur des Thermofluids durch Erhöhen der thermischen Verlustleistung der Pumpe zu erhöhen.

Die mit einem Wärmetauscher ausgestatteten Komponenten des Brennstoffzellensystems, für die das erfindungsgemäße Kühlsystem in vorteilhafter Weise verwendet werden kann, sind beispielsweise ein oder mehr Brennstoffzellen und/oder bei Verwendung von Wasserstoff als Brennstoff für die Brennstoffzelle ein Wasserstoffverdampfer. Die thermische Verlustleistung der Pumpe unterstützt nicht die Förderung des Thermofluids, sondern bewirkt nur eine Aufheizung des durch die Pumpe strömenden Thermofluids. Die Steuerung der Pumpe ist beispielsweise so konfiguriert, dass sie die thermische Verlustleistung der Pumpe durch Einprägen eines Gleichstromanteils (zusätzlich zum Wechselstrom zum Betätigen der Pumpe) in den Stator des Pumpenmotors erhöht. Der Pumpenmotor wird durch den Wechselstrom betätigt, wohingegen der Gleichstromanteil kein Drehmoment erzeugt, sondern den Stator des Pumpenmotors und damit das Thermofluid erwärmt. Die mit dem Thermofluidkreislauf des Kühlsystems verbundene Kälteanlage ist zum Beispiel in Form eines Kältemittelkreislaufs ausgestaltet, wobei in diesem Fall der Wärmeübertrager der Kälteanlage zum Beispiel ein Verdampfer des Kältemittelkreislaufs ist. Das Thermofluid des Thermofluidkreislaufs, das durch den Wärmetauscher der jeweiligen Komponente des Brennstoffzellensystems strömt, ist zum Beispiel Luft, ein Gas oder eine Flüssigkeit. Die Steuerung für die Pumpe des Thermofluidkreislaufs ist zum Beispiel direkt oder über eine andere Steuerung (z.B. Hauptsteuerung des Brennstoffzellensystems) mit Temperatursensoren zum Erfassen von Temperaturen der jeweiligen Komponente des Brennstoffzellensystems, und/oder mit Temperatursensoren zum Erfassen von Temperaturen des Thermofluids im Thermofluidkreislauf stromab und/oder stromauf des Wärmetauschers der jeweiligen Komponente des Brennstoffzellensystems und/oder stromab und/oder stromauf des Wärmeübertragers der Kälteanlage, und/oder mit einer Steuerung der Kälteanlage zum Erfassen der Kühlwirkung der Kälteanlage verbunden. Die Steuerung für die Pumpe des Thermofluidkreislaufs kann mit den anderen Steuerungen der Kälteanlage bzw. des Brennstoffzellensystems verbunden oder integriert sein.

Durch die gemäß der Erfindung eingerichtete gezielte Variation der thermischen Verlustleistung der Pumpe des Thermofluidkreislaufs wird der Wärmestrom von der Motorwicklung der Pumpen zum umgewälzten Thermofluid des Kühlsystems variiert, um so zum Beispiel beim Kaltstart des Brennstoffzellensystems eine zusätzlich erhöhte Heizleistung bereitzustellen. Durch das erfindungsgemäße Kühlsystem kann auf diese Weise zum Beispiel die Temperatur der Brennstoffzelle in einen Bereich erhöhter Reaktivität (z.B. >60°C) gebracht werden und/oder die Verdampfung und Temperierung des als Brennstoff benutzten Wasserstoffs unterstützt werden. Bei dem erfindungsgemäßen Kühlsystem kann vorteilhafterweise die Implementierung zusätzlicher Komponenten für eine Wärmebereitstellung umgangen werden, da die erforderliche Wärmebereitstellung ausschließlich über ohnehin vorhandene Geräte, nämlich die Pumpen der Thermofluidkreisläufe, durch deren spezielle Ansteuerung erfolgt, wozu zum Beispiel nur eine Software-Anpassung für die Motoransteuerung der Pumpe erforderlich ist. Durch die Vermeidung zusätzlicher Wärmequellengeräte können vorteilhafterweise der Baumraumbedarf, das Gesamtgewicht und der Zertifizierungsaufwand des Brennstoffzellensystems reduziert werden. Außerdem kann generell die Systemkomplexität des Brennstoffzellensystems reduziert werden, was auch mögliche Gefahrenquellen reduziert und damit die Nachweisführung bezüglich der Sicherheitsbetrachtung minimiert.

In einer Ausgestaltung der Erfindung umfasst der Thermofluidkreislauf eine Wärmetauschleitung durch den Wärmeübertrager der Kälteanlage, die mit einem ersten Ventil zum Öffnen und Schließen der Wärmetauschleitung ausgestattet ist, und eine den Wärmeübertrager der Kälteanlage umgehende Bypassleitung, die mit einem zweiten Ventil zum Öffnen und Schließen der Bypassleitung ausgestattet ist. Bei dieser Ausgestaltung ist die Steuerung zum Ansteuern der Pumpe des Thermofluidkreislaufs vorzugsweise ferner konfiguriert, um bei Bedarf eines erhöhten Temperaturniveaus der jeweiligen Komponente des Brennstoffzellensystems das zweite Ventil in der Bypassleitung zumindest teilweise zu öffnen, sodass zumindest ein Teil des Thermofluids durch die Kälteanlage nicht gekühlt wird und damit die Temperatur des Thermofluids bei Bedarf etwas höher bleiben kann. Im Extremfall kann die Steuerung der Pumpe das erste Ventil in der Wärmetauschleitung schließen und das zweite Ventil in der Bypassleitung öffnen, sodass das Thermofluid durch die Kälteanlage überhaupt nicht gekühlt wird und damit die Temperatur des Thermofluids bei Bedarf deutlich höher bleiben kann. Die Wärmetauschleitung ist beispielsweise gebildet durch eine Wärmetauscheinleitung, die das Thermofluid in den Wärmeübertrager leitet, und eine Wärmetauschausleitung, die das abgekühlte Thermofluid aus dem Wärmeübertrager leitet, wobei das erste Ventil bevorzugt in der Wärmetauscheinleitung enthalten ist.

Mit dem erfindungsgemäßen Kühlsystem können grundsätzlich verschiedene Brennstoffzellensysteme realisiert werden. In einer ersten Ausführungsform umfasst das Brennstoffzellensystem eine Brennstoffzelle mit einem Wärmetauscher und ist der Thermofluidkreislauf des erfindungsgemäßen Kühlsystems mit einem Thermofluideinlass und einem Thermofluidauslass des Wärmetauschers der Brennstoffzelle verbunden. In einer zweiten Ausführungsform umfasst das Brennstoffzellensystem eine Brennstoffzelle mit einem Wärmetauscher und eine Brennstoffzuführleitung zur Brennstoffzelle, die einen Wasserstoffverdampfer mit einem Wärmetauscher aufweist, und sind ein erstes erfindungsgemäßes Kühlsystem, dessen Thermofluidkreislauf mit einem Thermofluideinlass und einem Thermofluidauslass des Wärmetauschers der Brennstoffzelle verbunden ist, und/oder ein zweites erfindungsgemäßes Kühlsystem, dessen Thermofluidkreislauf mit einem Thermofluideinlass und einem Thermofluidauslass des Wärmetauschers des Wasserstoffverdampfers verbunden ist, vorgesehen. In einer dritten Ausführungsform umfasst das Brennstoffzellensystem eine Brennstoffzelle mit einem Wärmetauscher und eine Brennstoffzuführleitung zur Brennstoffzelle, die einen Wasserstoffverdampfer mit einem Wärmetauscher aufweist, und ist ein gemeinsames erfindungsgemäßes Kühlsystem vorgesehen, dessen Thermofluidkreislauf mit einem Thermofluideinlass und einem Thermofluidauslass des Wärmetauschers der Brennstoffzelle und auch mit einem Thermofluideinlass und einem Thermofluidauslass des Wärmetauschers des Wasserstoffverdampfers verbunden ist.

Gemäß einem zweiten Aspekt der Erfindung enthält das Verfahren zum Betreiben eines Kühlsystems für wenigstens eine mit einem Wärmetauscher versehene Komponente eines Brennstoffzellensystems, wobei das Kühlsystem eine Kälteanlage und einen Thermofluidkreislauf, der einerseits mit einem Thermofluideinlass und einem Thermofluidauslass des Wärmetauschers der jeweiligen Komponente des Brennstoffzellensystems verbunden ist und andererseits mit einem Wärmeübertrager der Kälteanlage verbunden ist, aufweist, ein Fördern eines Thermofluids durch den Wärmetauscher der jeweiligen Komponente des Brennstoffzellensystems und durch den Wärmeübertrager der Kälteanlage mittels einer Pumpe in dem Thermofluidkreislauf; und gemäß der Erfindung zusätzlich ein Variieren einer thermischen Verlustleistung der Pumpe, um bei Bedarf eines erhöhten Temperaturniveaus der jeweiligen Komponente des Brennstoffzellensystems die Temperatur des Thermofluids durch Erhöhen der thermischen Verlustleistung der Pumpe zu erhöhen.

Die thermische Verlustleistung der Pumpe wird vorzugsweise durch Einprägen eines Gleichstromanteils in den Stator des Pumpenmotors erhöht. In einer Ausgestaltung der Erfindung kann das Thermofluid im Thermofluidkreislauf bei Bedarf eines erhöhten Temperaturniveaus der jeweiligen Komponente des Brennstoffzellensystems außerdem zumindest teilweise anstatt durch eine Wärmetauschleitung durch den Wärmeübertrager der Kälteanlage durch eine den Wärmeübertrager der Kälteanlage umgehende Bypassleitung gefördert werden. Im Extremfall kann das Thermofluid auch ausschließlich durch die den Wärmeübertrager der Kälteanlage umgehende Bypassleitung geleitet werden, sodass das Thermofluid durch die Kälteanlage überhaupt nicht gekühlt wird und damit die Temperatur des Thermofluids bei Bedarf deutlich höher bleiben kann.

Das erfindungsgemäße Verfahren zum Betreiben des Kühlsystems erzielt die gleichen Vorteile wie das erfindungsgemäße Kühlsystem. Bezüglich der Vorteile und der Begriffserläuterungen wird deshalb einfach auf die Beschreibung oben in Bezug auf das Kühlsystem verwiesen.

Das erfindungsgemäße Verfahren zum Betreiben des Kühlsystems kann grundsätzlich in Betriebsverfahren für verschiedene Brennstoffzellensysteme verwendet werden. In einer ersten Ausführungsform umfasst das Brennstoffzellensystem eine Brennstoffzelle mit einem Wärmetauscher und wird das Kühlsystem für die Brennstoffzelle erfindungsgemäß betrieben. In einer zweiten Ausführungsform umfasst das Brennstoffzellensystem eine Brennstoffzelle mit einem Wärmetauscher und einen Wasserstoffverdampfer mit einem Wärmetauscher in einer Brennstoffzuführleitung zur Brennstoffzelle, und wird ein erstes Kühlsystem für die Brennstoffzelle erfindungsgemäß betrieben wird und/oder wird ein zweites Kühlsystem für den Wasserstoffverdampfer erfindungsgemäß betrieben. In einer dritten Ausführungsform umfasst das Brennstoffzellensystem eine Brennstoffzelle mit einem Wärmetauscher und einen Wasserstoffverdampfer mit einem Wärmetauscher in einer Brennstoffzuführleitung zur Brennstoffzelle und wird ein gemeinsames Kühlsystem für die Brennstoffzelle und für den Wasserstoffverdampfer erfindungsgemäß betrieben.

Die oben erläuterten Kühlsysteme, Brennstoffzellensysteme und Betriebsverfahren gemäß der Erfindung können grundsätzliche in beliebige Fahrzeuge eingesetzt werden, wobei der Einsatz in Flugzeugen besonders vorteilhaft ist. Außerdem können die erfindungsgemäßen Brennstoffzellensysteme grundsätzlich für beliebige Aufgaben, zum Bereitstellen beliebiger Energien, zum Versorgen beliebiger Lasten verwendet werden.

Der Erfindungsgegenstand ist durch die anhängenden Ansprüche definiert. Obige sowie weitere Merkmale und Vorteile der Erfindung werden aus der nachfolgenden beispielhaften Beschreibung bevorzugter, nicht-einschränkender Ausführungsbeispiele anhand der beiliegenden Zeichnung besser verständlich. Darin zeigen, größtenteils schematisch:
- Fig. 1: ein erstes Ausführungsbeispiel eines Brennstoffzellensystems mit einem Kühlsystem gemäß der Erfindung;
- Fig. 2: ein zweites Ausführungsbeispiel eines Brennstoffzellensystems mit einem Kühlsystem gemäß der Erfindung;
- Fig. 3: ein drittes Ausführungsbeispiel eines Brennstoffzellensystems mit Kühlsystemen gemäß der Erfindung; und
- Fig. 4: ein viertes Ausführungsbeispiel eines Brennstoffzellensystems mit einem Kühlsystem gemäß der Erfindung.

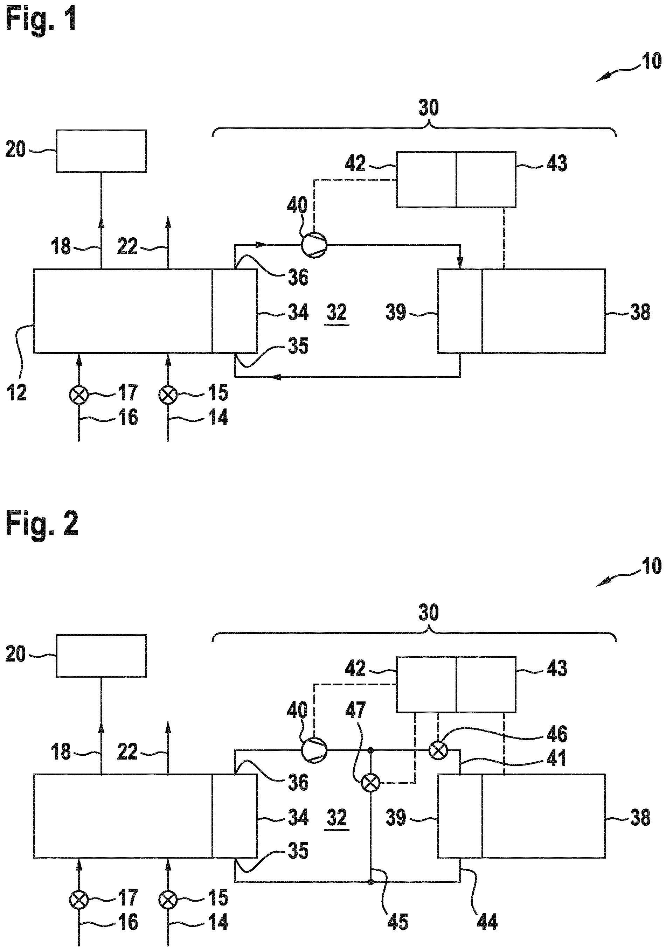

Fig. 1 veranschaulicht ein erstes Ausführungsbeispiel eines Brennstoffzellensystems gemäß der Erfindung, das zum Beispiel in Flugzeugen eingesetzt werden kann.

Das Brennstoffzellensystem 10 enthält eine Brennstoffzelle 12, in deren Kathode durch eine Brennstoffzuführleitung 14 ein Brennstoff (z.B. Wasserstoff H₂ aus einem Wasserstofftank) gefördert wird, wobei in der Brennstoffzuführleitung 14 ein Ventil 15 zum Steuern der Brennstoffeinleitung vorgesehen ist, und in deren Anode durch eine Oxidationsmittelzuführleitung 16 ein Oxidationsmittel (z.B. Sauerstoff O₂ aus Luft) gefördert wird, wobei in der Oxidationsmittelzuführleitung 16 ein Ventil 17 zum Steuern der Oxidationsmitteleinleitung vorgesehen ist. In der Brennstoffzelle 12 ist zwischen der Kathode und der Anode eine Membran, und in der Brennstoffzelle entsteht durch die Einleitung von Brennstoff und Oxidationsmittel ein Strom, ein Wasser H₂O und Wärme. Der in der Brennstoffzelle 12 generierte Strom wird aus deren Membran über eine Stromleitung 18 zu einer elektrischen Last (z.B. Elektromotor) geleitet. Das in der Brennstoffzelle 12 entstehende Wasser H₂O wird über eine Wasserablaufleitung 22 ausgeleitet. Da Aufbau und Funktionsweise der Brennstoffzelle 12 bzw. des Brennstoffzellensystems 10 dem Fachmann grundsätzlich bekannt sind, wird hier auf mehr Erläuterungen verzichtet.

Aufgrund der in der Brennstoffzelle 12 bei der Stromerzeugung entstehenden Wärme enthält das Brennstoffzellensystem ein Kühlsystem 30, um die Funktionsfähigkeit der Brennstoffzelle 12 abzusichern. Dieses Kühlsystem 30 hat einen Thermofluidkreislauf 32, dessen Thermofluid (z.B. Luft) gekühlt wird und durch einen Wärmetauscher 34 der Brennstoffzelle 12 geleitet wird. Der Thermofluidkreislauf 32 ist hierzu einerseits mit einem Thermofluideinlass 35 und einem Thermofluidauslass 36 des Wärmetauschers 34 der Brennstoffzelle 12 verbunden und andererseits mit einer Kälteanlage 38 verbunden, wobei das Thermofluid durch einen Wärmeübertrager 39 der Kälteanlage 38 geleitet wird. Als Kälteanlage 38 wird zum Beispiel ein Kältemittelkreislauf verwendet, wobei in diesem Fall der Wärmeübertrager 39 zum Beispiel ein Verdampfer des Kältemittelkreislaufs ist. Im Thermofluidkreislauf 32 ist außerdem wenigstens eine Pumpe 40 zum Fördern des Thermofluids durch den Wärmetauscher 34 der Brennstoffzelle 12 und den Wärmeübertrager 39 der Kälteanlage 38 vorhanden. Diese wenigstens eine Pumpe 40 ist zum Beispiel stromab des Wärmetauschers 34 der Brennstoffzelle 12 und stromauf des Wärmeübertragers 39 der Kälteanlage 38 positioniert. Das Kühlsystem 30 umfasst ferner eine Steuerung 42 für die Pumpe 40 und eine Steuerung 43 für die Kälteanlage 38. Die Steuerung 42 für die Pumpe 40 und die Steuerung 43 für die Kälteanlage 38 sind vorzugsweise miteinander verbunden oder sogar miteinander integriert, und vorzugsweise auch mit einer Steuerung (nicht dargestellt) der Brennstoffzelle bzw. einer Zentralsteuerung des Brennstoffsystems 10 verbunden oder sogar integriert. Da Aufbau und Funktionsweise des Thermofluidkreislaufs 32 und der Kälteanlage 38 dem Fachmann grundsätzlich bekannt sind, wird hier nachfolgend nur die spezielle Maßnahme gemäß der Erfindung erläutert.

Gemäß der Erfindung ist die Steuerung 42 für die Pumpe 40 derart konfiguriert, dass sie nicht nur ein Drehmoment zum Fördern des Thermofluids erzeugt, sondern außerdem eine thermische Verlustleistung der Pumpe variieren kann. Zum Erzeugen des Drehmoments betätigt die Steuerung 42 die Pumpe 40 mit Wechselstrom. Bei Bedarf eines erhöhten Temperaturniveaus der Brennstoffzelle 12, zum Beispiel während einer Kaltstartphase, erhöht die Steuerung 42 die Temperatur des Thermofluids durch entsprechendes Erhöhen der thermischen Verlustleistung der Pumpe 40, indem sie in den Pumpenmotor zusätzlich zum Wechselstrom auch einen Gleichstromanteil einprägt. Der Pumpenmotor wird auf diese Weise weiterhin durch den Wechselstrom betätigt, wohingegen der Gleichstromanteil kein Drehmoment erzeugt, sondern den Stator des Pumpenmotors und damit das Thermofluid erwärmt. Die thermische Verlustleistung der Pumpe 40 unterstützt also nicht die Förderung des Thermofluids, sondern bewirkt nur eine Aufheizung des durch die Pumpe 40 strömenden Thermofluids. Durch diese spezielle Konfiguration der Steuerung 42 für die Pumpe 40 des Thermofluidkreislaufs 32 kann zum erforderlichen Erhöhen der Temperatur der Brennstoffzelle 12 zum Beispiel während eines Kaltstarts des Flugzeugs auf zusätzliche Wärmequellengeräte verzichtet werden.

Die Steuerung 42 der Pumpe 40 empfängt zum Beispiel von der Zentralsteuerung des Brennstoffzellensystems Anweisungen, ob und in welchem Maß die thermische Verlustleistung der Pumpe 40 erhöht werden soll. Alternativ oder zusätzlich empfängt die Steuerung 42 der Pumpe auch Temperaturinformationen von der Steuerung 43 der Kälteanlage 38, einem Temperatursensor der Brennstoffzelle 12, einem Temperatursensor des Thermofluidkreislaufs 32 stromab des Wärmetauschers 34 der Brennstoffzelle 12 und/oder einem Temperatursensor des Thermofluidkreislaufs 32 stromab des Wärmeübertragers 39 der Kälteanlage 38.

Bezugnehmend auf Fig. 2 wird nun ein zweites Ausführungsbeispiel eines Brennstoffzellensystems gemäß der Erfindung erläutert. Gleiche Komponenten wie im ersten Ausführungsbeispiel sind mit denselben Bezugsziffern wie in Fig. 1 gekennzeichnet.

Im Unterschied zu Fig. 1 hat der Thermofluidkreislauf 32 des Kühlsystems 30 stromab der Pumpe 40 zur Verbindung mit dem Wärmeübertrager 39 der Kälteanlage 38 eine Wärmetauscheinleitung 41, die das Thermofluid in den Wärmeübertrager 39 einleitet, um abgekühlt zu werden, eine Wärmetauschausleitung 44, die das abgekühlte Thermofluid aus dem Wärmeübertrager 39 ausleitet, und zusätzlich eine Bypassleitung 45 zum Umgehen des Wärmeübertragers 39. Die Wärmetauscheinleitung 41 und die Wärmetauschausleitung 44 bilden zusammen die Wärmetauschleitung für das Thermofluid durch den Wärmeübertrager 39. In der Wärmetauscheinleitung 41 befindet sich ein erstes Ventil 46 und in der Bypassleitung 45 befindet sich ein zweites Ventil 47. Die Steuerung 42 der Pumpe 40 ist zusätzlich zum Ansteuern der Pumpe 40 auch konfiguriert, um diese beiden Ventile 46, 47 zu öffnen und zu schließen. Bei Bedarf eines erhöhten Temperaturniveaus der Brennstoffzelle 12 erhöht die Steuerung 42 die thermische Verlustleistung der Pumpe. Bei Bedarf einer starken Erhöhung des Temperaturniveaus der Brennstoffzelle 12 kann die Steuerung 42 zusätzlich das Ventil 46 der Wärmetauschleitung 44 offen lassen und das Ventil 47 der Bypassleitung 45 zumindest etwas öffnen, sodass ein Teil des Thermofluids nicht durch die Kälteanlage 38 abgekühlt wird und damit die Temperatur des zum Thermofluideinlass 34 des Wärmetauschers 34 der Brennstoffzelle 12 strömenden Temperaturfluids etwas höher bleibt. Bei Bedarf einer extremen Erhöhung des Temperaturniveaus der Brennstoffzelle 12 kann die Steuerung 42 sogar das Ventil 46 der Wärmetauschleitung 44 schließen und das Ventil 47 der Bypassleitung 45 öffnen, sodass das Thermofluid überhaupt nicht durch die Kälteanlage 38 abgekühlt wird und damit die Temperatur des zum Thermofluideinlass 34 des Wärmetauschers 34 der Brennstoffzelle 12 strömenden Thermofluids wesentlich höher bleibt.

Im Übrigen entsprechen Aufbau und Funktionsweise des Kühlsystems 30 und des Brennstoffzellensystems 10 jenen des ersten Ausführungsbeispiels.

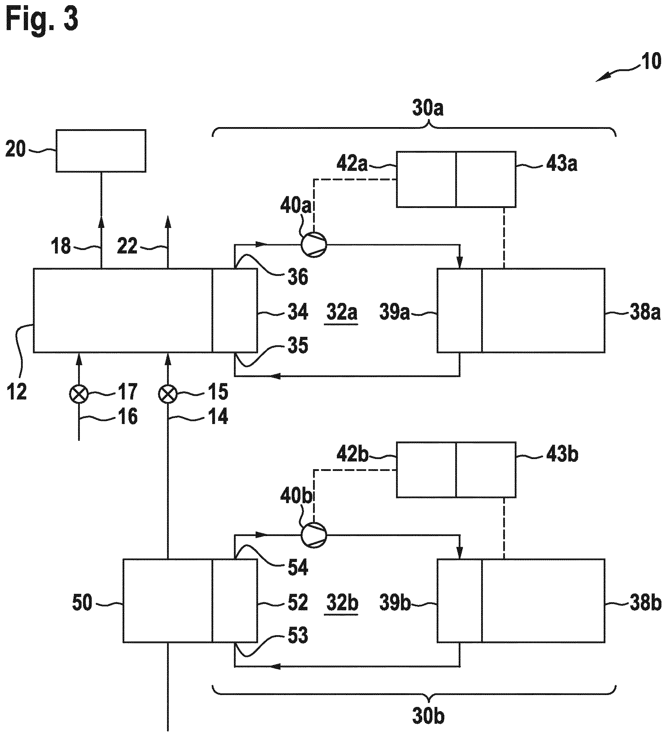

Bezugnehmend auf Fig. 3 wird nun ein drittes Ausführungsbeispiel eines Brennstoffzellensystems gemäß der Erfindung erläutert. Gleiche Komponenten wie im ersten Ausführungsbeispiel sind mit denselben bzw. analogen Bezugsziffern wie in Fig. 1 gekennzeichnet.

Im Unterschied zu Fig. 1 ist in der Brennstoffzuführleitung 14 zur Brennstoffzelle 12 außerdem ein Wasserstoffverdampfer 50 vorhanden. Zum Temperieren der Brennstoffzelle 12 enthält das Brennstoffzellensystem 10 ein erstes Kühlsystem 30a, das in Übereinstimmung mit dem Kühlsystem 30 in Fig. 1 einen Thermofluidkreislauf 32a aufweist, der einerseits mit dem Thermofluideinlass 35 und dem Thermofluidauslass 36 des Wärmetauschers 34 der Brennstoffzelle 12 und andererseits mit dem Wärmeübertrager 39a einer ersten Kälteanlage 38a verbunden ist, und dessen Pumpe 40a von einer ersten Steuerung 42a angesteuert wird, die identisch wie die Pumpe 40 in Fig. 1 konfiguriert ist. Zusätzlich enthält das Brennstoffzellensystem 10 zum Temperieren des Wasserstoffverdampfers 50 ein zweites Kühlsystem 30b, das in Übereinstimmung mit dem Kühlsystem 30 in Fig. 1 einen Thermofluidkreislauf 32b aufweist, der einerseits mit einem Thermofluideinlass 53 und einem Thermofluidauslass 54 eines Wärmetauschers 52 des Wasserstoffverdampfers 50 und andererseits mit einem Wärmeübertrager 39b einer zweiten Kälteanlage 38b verbunden ist, und dessen Pumpe 40b von einer zweiten Steuerung 42b angesteuert wird, die identisch wie die Pumpe 40 in Fig. 1 konfiguriert ist. Wahlweise können die beiden Steuerungen 42a, 42b für die Pumpen 40a, 40b der beiden Thermofluidkreisläufe 32a, 32b auch miteinander verbunden oder integriert sein.

Außerdem können der Thermofluidkreislauf 32a des ersten Kühlsystems 30a und/oder der Thermofluidkreislauf 32b des zweiten Kühlsystems 30b optional zusätzlich mit einer Bypassleitung 45 gemäß dem Ausführungsbeispiel von Fig. 2 ausgestattet sein.

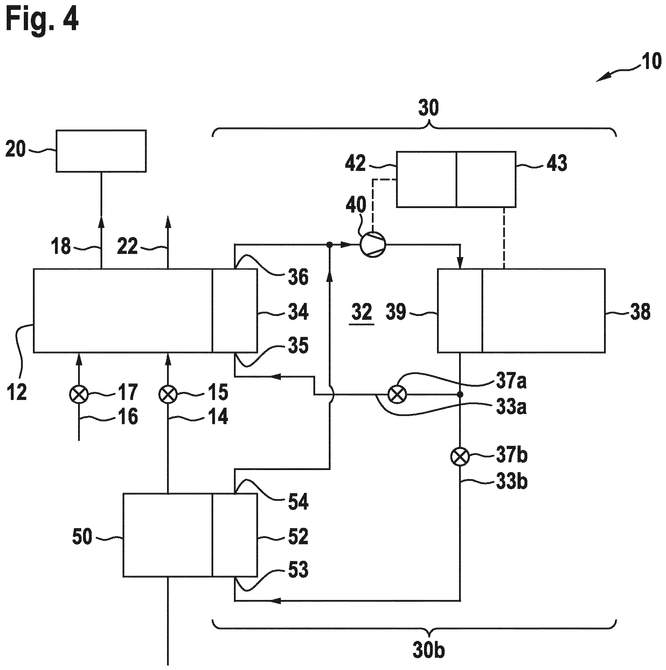

Bezugnehmend auf Fig. 4 wird nun ein viertes Ausführungsbeispiel eines Brennstoffzellensystems gemäß der Erfindung erläutert. Gleiche Komponenten wie im ersten Ausführungsbeispiel sind mit denselben bzw. analogen Bezugsziffern wie in Fig. 1 gekennzeichnet.

Im Unterschied zu Fig. 1 ist in der Brennstoffzuführleitung 14 zur Brennstoffzelle 12 außerdem ein Wasserstoffverdampfer 50 vorhanden. Im Unterschied zu Fig. 3 ist anstelle von zwei Kühlsystemen 30a, 30b ein gemeinsames Kühlsystem 30 zum Temperieren der Brennstoffzelle 12 und des Wärmetauschverdampfers 50 vorgesehen. Analog zum Kühlsystem 30 in Fig. 1 weist das gemeinsame Kühlsystem 30 einen Thermofluidkreislauf 32a auf, der einerseits mit dem Thermofluideinlass 35 und dem Thermofluidauslass 36 des Wärmetauschers 34 der Brennstoffzelle 12 und auch mit dem Thermofluideinlass 53 und dem Thermofluidauslass 54 des Wärmetauschers 52 des Wasserstoffverdampfers 50 und andererseits mit dem Wärmeübertrager 39 der Kälteanlage 38 verbunden ist, und dessen Pumpe 40 von einer Steuerung 42 angesteuert wird, die identisch wie die Pumpe 40 in Fig. 1 konfiguriert ist. Aufgrund der Verbindung mit zwei Komponenten 12, 50 des Brennstoffzellensystem 10 enthält der Thermofluidkreislauf 32 stromab des Wärmeübertragers 39 der Kälteanlage 38 eine erste Teilleitung 33a zum Thermofluideinlass 35 des Wärmetauschers 34 der Brennstoffzelle 12 und eine zweite Teilleitung 33b zum Thermofluideinlass 53 des Wärmetauschers 52 des Wasserstoffverdampfers 50, in denen sich jeweils ein Ventil 37a, 37b befindet, damit von den beiden Komponenten 12, 50 je nach Temperierungsbedarf entweder nur eine einzelne mit dem Thermofluid versorgt wird oder beide gleichermaßen mit dem Thermofluid versorgt werden oder beide unterschiedlich stark mit dem Thermofluid versorgt werden. Die beiden Ventile 37a, 37b können zum Beispiel auch von der Steuerung 42 der Pumpe 40 angesteuert werden. Außerdem sind auch die Thermofluidauslässe 36, 54 der beiden Komponenten 12, 50 separat mit dem Thermofluidkreislauf 32 stromauf der Pumpe 40 verbunden, damit das aus dem Wärmetauscher 52 des Wasserstoffverdampfers 50 ausströmende Thermofluid nicht in den Wärmetauscher 34 der Brennstoffzelle 12 strömt.

Außerdem kann der Thermofluidkreislauf 30 dieses gemeinsamen Kühlsystems 30 optional zusätzlich mit einer Bypassleitung 45 gemäß dem Ausführungsbeispiel von Fig. 2 ausgestattet sein.

Der Erfindungsgegenstand ist durch die anhängenden Ansprüche definiert. Die oben erläuterten Ausführungsbeispiele dienen nur dem besseren Verständnis der Erfindung, sollen aber nicht den durch die Ansprüche definierten Schutzbereich einschränken. Wie für den Fachmann ersichtlich, sind auch noch andere Ausführungsformen im Rahmen der Erfindung möglich, insbesondere durch Weglassen einzelner Merkmale aus den oder Hinzufügen zusätzlicher Merkmale in die oben beschriebenen Ausführungsbeispiele und durch weitere (nicht explizit erwähnte) Merkmalskombinationen von zwei oder mehr der oben beschriebenen Ausführungsbeispiele.

### BEZUGSZIFFERNLISTE

10 Brennstoffzellensystem
12 Brennstoffzelle
14 Brennstoffzuführleitung
15 Ventil in 14
16 Oxidationsmittelzuführleitung
17 Ventil in 16
18 Stromleitung
20 elektrische Last
22 Wasserablaufleitung
30 Kühlsystem
30a erstes Kühlsystem
30b zweites Kühlsystem
32, 32a, 32b Thermofluidkreislauf
33a, 33b Teilleitungen zu 12 / 50
37a, 37b Ventile in 33a, 33b
34 Wärmetauscher der Brennstoffzelle
35 Thermofluideinlass in 34
36 Thermofluidauslass aus 34
38, 38a, 38b Kälteanlage
39, 39a, 39b Wärmeübertrager der Kälteanlage
40, 40a, 40b Pumpe in 32/32a/32b
41 Wärmetauscheinleitung in Wärmeübertrager der Kälteanlage
42, 42a, 42b Steuerung für Pumpe
43, 43a, 43b Steuerung für Kälteanlage
44 Wärmetauschausleitung aus Wärmeübertrager der Kälteanlage
45 Bypassleitung um Wärmeübertrager der Kälteanlage
46 erstes Ventil in 44
47 zweites Ventil in 45
50 Wasserstoffverdampfer
52 Wärmetauscher des Wasserstoffverdampfers
53 Thermofluideinlass in 52
54 Thermofluidauslass aus 52

## Patentansprüche

1. Kühlsystem (30; 30a; 30b) für wenigstens eine mit einem Wärmetauscher (34; 52) ausgestattete Komponente (12, 50) eines Brennstoffzellensystems (10), aufweisend
eine Kälteanlage (38; 38a; 38b);
einen Thermofluidkreislauf (32; 32; 32b), der einerseits mit einem Thermofluideinlass (35; 53) und einem Thermofluidauslass (36; 54) des Wärmetauschers (34; 52) der jeweiligen Komponente (12; 50) des Brennstoffzellensystems (10) verbunden ist und andererseits mit einem Wärmeübertrager (39; 39a; 39b) der Kälteanlage (38; 38a; 38b) verbunden ist;
eine Pumpe (40; 40a; 40b) in dem Thermofluidkreislauf (32; 32a; 32) zum Fördern eines Thermofluids durch den Wärmetauscher (34; 52) der jeweiligen Komponente (12; 50) des Brennstoffzellensystems (10) und durch den Wärmeübertrager (39; 39a; 39b) der Kälteanlage (38; 38a; 38b); und
eine Steuerung (42; 42a; 42b) zum Ansteuern der Pumpe (40; 40a; 40b) des Thermofluidkreislaufs (32; 32a; 32b),
wobei die Steuerung (42; 42a; 42b) konfiguriert ist, um eine thermische Verlustleistung der Pumpe (40; 40a; 40b) zu variieren, um bei Bedarf eines erhöhten Temperaturniveaus der jeweiligen Komponente (12; 50) des Brennstoffzellensystems (10) die Temperatur des Thermofluids durch Erhöhen der thermischen Verlustleistung der Pumpe (40; 40a; 40b) zu erhöhen.

2. Kühlsystem (30; 30a; 30b) nach Anspruch 1, bei welchem die Steuerung (42; 42a; 42b) der Pumpe (40; 40a; 40b) konfiguriert ist, um die thermische Verlustleistung der Pumpe (40; 40a; 40b) durch Einprägen eines Gleichstromanteils in den Stator des Pumpenmotors zu erhöhen.

3. Kühlsystem (30; 30a; 30b) nach Anspruch 1 oder 2, bei welchem der Thermofluidkreislauf (32; 32a; 32b) eine Wärmetauschleitung (41, 44) durch den Wärmeübertrager (39; 39a; 39b) der Kälteanlage (38a; 38a; 38b), die mit einem ersten Ventil (46) zum Öffnen und Schließen der Wärmetauschleitung (41, 44) ausgestattet ist, und eine den Wärmeübertrager (39; 39a; 39b) der Kälteanlage (38a; 38a; 38b) umgehende Bypassleitung (45), die mit einem zweiten Ventil (47) zum Öffnen und Schließen der Bypassleitung (45) ausgestattet ist, aufweist.

4. Kühlsystem (30; 30a; 30b) nach Anspruch 3, bei welchem die Steuerung (42; 42a; 42b) zum Ansteuern der Pumpe (40; 40a; 40b) des Thermofluidkreislaufs (32; 32a; 32b) ferner konfiguriert ist, um bei Bedarf eines erhöhten Temperaturniveaus der jeweiligen Komponente (12; 50) des Brennstoffzellensystems (10) das zweite Ventil (47) in der Bypassleitung (45) zumindest teilweise zu öffnen.

5. Brennstoffzellensystem (10), aufweisend
eine Brennstoffzelle (12) mit einem Wärmetauscher (34); und
ein Kühlsystem (30) nach einem der Ansprüche 1 bis 4, dessen Thermofluidkreislauf (32) mit einem Thermofluideinlass (35) und einem Thermofluidauslass (36) des Wärmetauschers (34) der Brennstoffzelle (12) verbunden ist.

6. Brennstoffzellensystem (10), aufweisend
eine Brennstoffzelle (12) mit einem Wärmetauscher (34);
eine Brennstoffzuführleitung (14) zur Brennstoffzelle (12), die einen Wasserstoffverdampfer (50) mit einem Wärmetauscher (52) aufweist; und
ein erstes Kühlsystem (30a) nach einem der Ansprüche 1 bis 4, dessen Thermofluidkreislauf (32a) mit einem Thermofluideinlass (35) und einem Thermofluidauslass (36) des Wärmetauschers (34) der Brennstoffzelle (12) verbunden ist, und/oder ein zweites Kühlsystem (30b) nach einem der Ansprüche 1 bis 4, dessen Thermofluidkreislauf (32b) mit einem Thermofluideinlass (53) und einem Thermofluidauslass (54) des Wärmetauschers (52) des Wasserstoffverdampfers (50) verbunden ist.

7. Brennstoffzellensystem (10), aufweisend
eine Brennstoffzelle (12) mit einem Wärmetauscher (34);
eine Brennstoffzuführleitung (14) zur Brennstoffzelle (12), die einen Wasserstoffverdampfer (50) mit einem Wärmetauscher (52) aufweist; und
ein gemeinsames Kühlsystem (30) nach einem der Ansprüche 1 bis 4, dessen Thermofluidkreislauf (32) mit einem Thermofluideinlass (35) und einem Thermofluidauslass (36) des Wärmetauschers (34) der Brennstoffzelle (12) und mit einem Thermofluideinlass (53) und einem Thermofluidauslass (54) des Wärmetauschers (52) des Wasserstoffverdampfers (50) verbunden ist.

8. Verfahren zum Betreiben eines Kühlsystems (30; 30a; 30b) für wenigstens eine mit einem Wärmetauscher (34; 52) versehene Komponente (12, 50) eines Brennstoffzellensystems (10), wobei das Kühlsystem eine Kälteanlage (38; 38a; 38b) und einen Thermofluidkreislauf (32; 32; 32b), der einerseits mit einem Thermofluideinlass (35; 53) und einem Thermofluidauslass (36; 54) des Wärmetauschers (34; 52) der jeweiligen Komponente (12; 50) des Brennstoffzellensystems (10) verbunden ist und andererseits mit einem Wärmeübertrager (39; 39a; 39b) der Kälteanlage (38; 38a; 38b) verbunden ist, aufweist, wobei das Verfahren aufweist:
Fördern eines Thermofluids durch den Wärmetauscher (34; 52) der jeweiligen Komponente (12; 50) des Brennstoffzellensystems (10) und durch den Wärmeübertrager (39; 39a; 39b) der Kälteanlage (38; 38a; 38b) mittels einer Pumpe (40; 40a; 40b) in dem Thermofluidkreislauf (32; 32a; 32); und
Variieren einer thermischen Verlustleistung der Pumpe (40; 40a; 40b), um bei Bedarf eines erhöhten Temperaturniveaus der jeweiligen Komponente (12; 50) des Brennstoffzellensystems (10) die Temperatur des Thermofluids durch Erhöhen der thermischen Verlustleistung der Pumpe (40; 40a; 40b) zu erhöhen.

9. Verfahren nach Anspruch 8, bei welchem die thermische Verlustleistung der Pumpe (40; 40a; 40b) durch Einprägen eines Gleichstromanteils in den Stator des Pumpenmotors erhöht wird.

10. Verfahren nach Anspruch 8 oder 9, bei welchem das Thermofluid im Thermofluidkreislauf (32; 32a; 32b) bei Bedarf eines erhöhten Temperaturniveaus der jeweiligen Komponente (12; 50) des Brennstoffzellensystems (10) zumindest teilweise anstatt durch eine Wärmetauschleitung (41, 44) durch den Wärmeübertrager (39; 39a; 39b) der Kälteanlage (38a; 38a; 38b) durch eine den Wärmeübertrager (39; 39a; 39b) der Kälteanlage (38a; 38a; 38b) umgehende Bypassleitung (45) gefördert wird.

11. Verfahren zum Betreiben eines Brennstoffzellensystems (10), das eine Brennstoffzelle (12) mit einem Wärmetauscher (34) aufweist, wobei ein Kühlsystem (30) für die Brennstoffzelle (12) nach einem der Ansprüche 8 bis 10 betrieben wird.

12. Verfahren zum Betreiben eines Brennstoffzellensystems (10), das eine Brennstoffzelle (12) mit einem Wärmetauscher (34) und einen Wasserstoffverdampfer (50) mit einem Wärmetauscher (52) in einer Brennstoffzuführleitung (14) zur Brennstoffzelle (12) aufweist, wobei ein erstes Kühlsystem (30a) für die Brennstoffzelle (12) nach einem der Ansprüche 8 bis 10 betrieben wird und/oder ein zweites Kühlsystem (30b) für den Wasserstoffverdampfer (50) nach einem der Ansprüche 8 bis 10 betrieben wird.

13. Verfahren zum Betreiben eines Brennstoffzellensystems (10), das eine Brennstoffzelle (12) mit einem Wärmetauscher (34) und einen Wasserstoffverdampfer (50) mit einem Wärmetauscher (52) in einer Brennstoffzuführleitung (14) zur Brennstoffzelle (12) aufweist, wobei ein gemeinsames Kühlsystem (30) für die Brennstoffzelle (12) und für den Wasserstoffverdampfer (50) nach einem der Ansprüche 8 bis 10 betrieben wird.

## Claims

1. Cooling system (30; 30a; 30b) for at least one component (12, 50), equipped with a heat exchanger (34; 52), of a fuel cell system (10), comprising
a refrigerating plant (38; 38a; 38b);
a thermofluid circuit (32; 32; 32b), which on the one hand is connected to a thermofluid inlet (35; 53) and a thermofluid outlet (36; 54) of the heat exchanger (34; 52) of the respective component (12; 50) of the fuel cell system (10) and on the other hand is connected to a heat exchanger (39; 39a; 39b) of the refrigerating plant (38; 38a; 38b);
a pump (40; 40a; 40b) in the thermofluid circuit (32; 32a; 32) for transporting a thermofluid through the heat exchanger (34; 52) of the respective component (12; 50) of the fuel cell system (10) and through the heat exchanger (39; 39a; 39b) of the refrigerating plant (38; 38a; 38b); and
a controller (42; 42a; 42b) for activating the pump (40; 40a; 40b) of the thermofluid circuit (32; 32a; 32b),
wherein the controller (42; 42a; 42b) is configured to vary a thermal power dissipation of the pump (40; 40a; 40b) in order when there is a need for an increased temperature level of the respective component (12; 50) of the fuel cell system (10) to increase the temperature of the thermofluid by increasing the thermal power dissipation of the pump (40; 40a; 40b).

2. Cooling system (30; 30a; 30b) according to Claim 1, in which the controller (42; 42a; 42b) of the pump (40; 40a; 40b) is configured to increase the thermal power dissipation of the pump (40; 40a; 40b) by injecting a direct current component into the stator of the pump motor.

3. Cooling system (30; 30a; 30b) according to Claim 1 or 2, in which the thermofluid circuit (32; 32a; 32b) comprises a heat exchange line (41, 44) through the heat exchanger (39; 39a; 39b) of the refrigerating plant (38a; 38a; 38b), which is equipped with a first valve (46) for opening and closing the heat exchange line (41, 44), and a bypass line (45), which bypasses the heat exchanger (39; 39a; 39b) of the refrigerating plant (38a; 38a; 38b) and is equipped with a second valve (47) for opening and closing the bypass line (45).

4. Cooling system (30; 30a; 30b) according to Claim 3, in which the controller (42; 42a; 42b) for activating the pump (40; 40a; 40b) of the thermofluid circuit (32; 32a; 32b) is also configured to open the second valve (47) in the bypass line (45), at least partially, when there is a need for an increased temperature level of the respective component (12; 50) of the fuel cell system (10).

5. Fuel cell system (10), comprising
a fuel cell (12) with a heat exchanger (34); and
a cooling system (30) according to one of Claims 1 to 4, the thermofluid circuit (32) of which is connected to a thermofluid inlet (35) and a thermofluid outlet (36) of the heat exchanger (34) of the fuel cell (12).

6. Fuel cell system (10), comprising
a fuel cell (12) with a heat exchanger (34);
a fuel feed line (14) to the fuel cell (12), which comprises a hydrogen evaporator (50) with a heat exchanger (52); and
a first cooling system (30a) according to one of Claims 1 to 4, the thermofluid circuit (32a) of which is connected to a thermofluid inlet (35) and a thermofluid outlet (36) of the heat exchanger (34) of the fuel cell (12), and/or a second cooling system (30b) according to one of Claims 1 to 4, the thermofluid circuit (32b) of which is connected to a thermofluid inlet (53) and a thermofluid outlet (54) of the heat exchanger (52) of the hydrogen evaporator (50).

7. Fuel cell system (10), comprising
a fuel cell (12) with a heat exchanger (34);
a fuel feed line (14) to the fuel cell (12), which comprises a hydrogen evaporator (50) with a heat exchanger (52); and
a shared cooling system (30) according to one of Claims 1 to 4, the thermofluid circuit (32) of which is connected to a thermofluid inlet (35) and a thermofluid outlet (36) of the heat exchanger (34) of the fuel cell (12) and to a thermofluid inlet (53) and a thermofluid outlet (54) of the heat exchanger (52) of the hydrogen evaporator (50).

8. Method for operating a cooling system (30; 30a; 30b) for at least one component (12, 50), provided with a heat exchanger (34; 52), of a fuel cell system (10), wherein the cooling system comprises a refrigerating plant (38; 38a; 38b) and a thermofluid circuit (32; 32; 32b), which on the one hand is connected to a thermofluid inlet (35; 53) and a thermofluid outlet (36; 54) of the heat exchanger (34; 52) of the respective component (12; 50) of the fuel cell system (10) and on the other hand is connected to a heat exchanger (39; 39a; 39b) of the refrigerating plant (38; 38a; 38b), wherein the method comprises: transporting a thermofluid through the heat exchanger (34; 52) of the respective component (12; 50) of the fuel cell system (10) and through the heat exchanger (39; 39a; 39b) of the refrigerating plant (38; 38a; 38b) by means of a pump (40; 40a; 40b) in the thermofluid circuit (32; 32a; 32); and
varying a thermal power dissipation of the pump (40; 40a; 40b) in order when there is a need for an increased temperature level of the respective component (12; 50) of the fuel cell system (10) to increase the temperature of the thermofluid by increasing the thermal power dissipation of the pump (40; 40a; 40b).

9. Method according to Claim 8, in which the thermal power dissipation of the pump (40; 40a; 40b) is increased by injecting a direct current component into the stator of the pump motor.

10. Method according to Claim 8 or 9, in which, when there is a need for an increased temperature level of the respective component (12; 50) of the fuel cell system (10), the thermofluid in the thermofluid circuit (32; 32a; 32b) is at least partially transported through a bypass line (45), which bypasses the heat exchanger (39; 39a; 39b) of the refrigerating plant (38a; 38a; 38b), instead of through a heat exchange line (41, 44) through the heat exchanger (39; 39a; 39b) of the refrigerating plant (38a; 38a; 38b).

11. Method for operating a fuel cell system (10), which comprises a fuel cell (12) with a heat exchanger (34), wherein a cooling system (30) for the fuel cell (12) is operated according to one of Claims 8 to 10.

12. Method for operating a fuel cell system (10), which comprises a fuel cell (12) with a heat exchanger (34) and a hydrogen evaporator (50) with a heat exchanger (52) in a fuel feed line (14) to the fuel cell (12), wherein a first cooling system (30a) for the fuel cell (12) is operated according to one of Claims 8 to 10 and/or a second cooling system (30b) for the hydrogen evaporator (50) is operated according to one of Claims 8 to 10.

13. Method for operating a fuel cell system (10), which comprises a fuel cell (12) with a heat exchanger (34) and a hydrogen evaporator (50) with a heat exchanger (52) in a fuel feed line (14) to the fuel cell (12), wherein a shared cooling system (30) for the fuel cell (12) and for the hydrogen evaporator (50) is operated according to one of Claims 8 to 10.

## Revendications

1. Système de refroidissement (30 ; 30a ; 30b) pour au moins un composant (12, 50), équipé d'un échangeur de chaleur (34 ; 52), d'un système de pile à combustible (10), présentant
une installation de réfrigération (38 ; 38a ; 38b) ;
un circuit (32 ; 32 ; 32b) de fluide thermique qui, d'une part, est relié à une entrée (35 ; 53) de fluide thermique et à une sortie (36 ; 54) de fluide thermique de l'échangeur de chaleur (34 ; 52) du composant respectif (12 ; 50) du système de pile à combustible (10) et, d'autre part, est relié à un échangeur de chaleur (39 ; 39a ; 39b) de l'installation de réfrigération (38 ; 38a ; 38b) ;
une pompe (40 ; 40a ; 40b) dans le circuit de fluide thermique (32 ; 32a ; 32) pour acheminer un fluide thermique à travers l'échangeur de chaleur (34 ; 52) du composant respectif (12 ; 50) du système de pile à combustible (10) et à travers l'échangeur de chaleur (39 ; 39a ; 39b) de l'installation de réfrigération (38 ; 38a ; 38b) ; et
un dispositif de commande (42 ; 42a ; 42b) pour commander la pompe (40 ; 40a ; 40b) du circuit (32 ; 32a ; 32b) de fluide thermique,
le dispositif de commande (42 ; 42a ; 42b) étant configuré pour faire varier une puissance thermique dissipée de la pompe (40 ; 40a ; 40b) afin d'augmenter, en cas de besoin d'un niveau de température élevé du composant respectif (12 ; 50) du système de pile à combustible (10), la température du fluide thermique en augmentant la puissance thermique dissipée de la pompe (40 ; 40a ; 40b).

2. Système de refroidissement (30 ; 30a ; 30b) selon la revendication 1, dans lequel le dispositif de commande (42 ; 42a ; 42b) de la pompe (40 ; 40a ; 40b) est configuré pour augmenter la dissipation thermique de la pompe (40 ; 40a ; 40b) en injectant une composante de courant continu dans le stator du moteur de pompe.

3. Système de refroidissement (30 ; 30a ; 30b) selon la revendication 1 ou la revendication 2, dans lequel le circuit (32 ; 32a ; 32b) de fluide thermique comprend une conduite (41, 44) d'échange de chaleur à travers l'échangeur de chaleur (39 ; 39a ; 39b) de l'installation de réfrigération (38a ; 38a ; 38b) équipée d'une première vanne (46) pour ouvrir et fermer la conduite (41, 44) d'échange de chaleur, et une conduite de dérivation (45) contournant l'échangeur de chaleur (39 ; 39a ; 39b) de l'installation de réfrigération (38a ; 38a ; 38b), équipée d'une deuxième vanne (47) pour ouvrir et fermer la conduite de dérivation (45).

4. Système de refroidissement (30 ; 30a ; 30b) selon la revendication 3, dans lequel le dispositif de commande (42 ; 42a ; 42b), pour piloter la pompe (40 ; 40a ; 40b) du circuit (32 ; 32a ; 32b) de fluide thermique, est en outre configuré pour ouvrir au moins partiellement la deuxième vanne (47) dans la conduite de dérivation (45) en cas de besoin d'un niveau de température élevé du composant respectif (12 ; 50) du système de pile à combustible (10).

5. Système de pile à combustible (10), comprenant
une pile à combustible (12) équipé d'un échangeur de chaleur (34) ; et
un système de refroidissement (30) selon l'une des revendications 1 à 4, dont le circuit de fluide thermique (32) est relié à une entrée (35) de fluide thermique et à une sortie (36) de fluide thermique de l'échangeur de chaleur (34) de la pile à combustible (12).

6. Système de pile à combustible (10), comprenant
une pile à combustible (12) équipée d'un échangeur de chaleur (34) ;
une conduite (14) d'alimentation de la pile à combustible (12) en combustible, qui comprend un évaporateur d'hydrogène (50) avec un échangeur de chaleur (52) ; et
un premier système de refroidissement (30a) selon l'une des revendications 1 à 4, dont le circuit (32a) de fluide thermique est relié à une entrée (35) de fluide thermique et à une sortie (36) de fluide thermique de l'échangeur de chaleur (34) de la pile à combustible (12), et/ou un deuxième système de refroidissement (30b) selon l'une des revendications 1 à 4, dont le circuit (32b) de fluide thermique est relié à une entrée (53) de fluide thermique et à une sortie (54) de fluide thermique de l'échangeur de chaleur (52) de l'évaporateur d'hydrogène (50).

7. Système de pile à combustible (10), comprenant
une pile à combustible (12) équipée d'un échangeur de chaleur (34) ;
une conduite (14) d'alimentation de la pile à combustible (12) en combustible, qui comprend un évaporateur d'hydrogène (50) avec un échangeur de chaleur (52) ; et
un système de refroidissement commun (30) selon l'une des revendications 1 à 4, dont le circuit (32) de fluide thermique est relié à une entrée (35) de fluide thermique et à une sortie (36) de fluide thermique de l'échangeur de chaleur (34) de la pile à combustible (12) et à une entrée (53) de fluide thermique et à une sortie (54) de fluide thermique de l'échangeur de chaleur (52) de l'évaporateur d'hydrogène (50).

8. Procédé de fonctionnement d'un système de refroidissement (30 ; 30a ; 30b) pour au moins un composant (12, 50) d'un système de pile à combustible (10) pourvu d'un échangeur de chaleur (34 ; 52), le système de refroidissement comprenant une installation de réfrigération (38 ; 38a ; 38b) et un circuit de fluide thermique (32 ; 32 ; 32b) relié d'une part à une entrée (35 ; 53) de fluide thermique et une sortie (36 ; 54) de fluide thermique de l'échangeur de chaleur (34 ; 52) du composant respectif (12 ; 50) du système de pile à combustible (10) et, d'autre part, est relié à un échangeur de chaleur (39 ; 39a ; 39b) de l'installation de réfrigération (38 ; 38a ; 38b), le procédé comprenant : le fait d'acheminer un fluide thermique à travers l'échangeur de chaleur (34 ; 52) du composant respectif (12 ; 50) du système de pile à combustible (10) et à travers l'échangeur de chaleur (39 ; 39a ; 39b) de l'installation de réfrigération (38 ; 38a ; 38b) au moyen d'une pompe (40 ; 40a ; 40b) dans le circuit (32 ; 32a ; 32) de fluide thermique ; et
le fait de faire varier une puissance thermique dissipée de la pompe (40 ; 40a ; 40b) pour, en cas de besoin d'un niveau de température élevé du composant respectif (12 ; 50) du système de pile à combustible (10), augmenter la température du fluide thermique en augmentant la puissance thermique dissipée de la pompe (40 ; 40a ; 40b).

9. Procédé selon la revendication 8, dans lequel la puissance thermique dissipée de la pompe (40 ; 40a ; 40b) est augmentée par l'injection d'une composante de courant continu dans le stator du moteur de pompe.

10. Procédé selon la revendication 8 ou la revendication 9, dans lequel le fluide thermique dans le circuit (32 ; 32a ; 32b) de fluide thermique est, en cas de besoin d'un niveau de température élevé du composant respectif (12 ; 50) du système de pile à combustible (10), au moins partiellement transporté, au lieu de passer par une conduite (41, 44) d'échange de chaleur, à travers l'échangeur de chaleur (39 ; 39a ; 39b) de l'installation de réfrigération (38a ; 38a ; 38b), par une conduite de dérivation (45) contournant l'échangeur de chaleur (39 ; 39a ; 39b) de l'installation de réfrigération (38a ; 38a ; 38b).

11. Procédé de fonctionnement d'un système de pile à combustible (10) comprenant une pile à combustible (12) équipée d'un échangeur de chaleur (34), dans lequel il est exploité un système de refroidissement (30) de la pile à combustible (12) selon l'une des revendications 8 à 10.

12. Procédé de fonctionnement d'un système de pile à combustible (10) comprenant une pile à combustible (12) équipée d'un échangeur de chaleur (34) et un évaporateur d'hydrogène (50) avec un échangeur de chaleur (52) dans une conduite (14) d'alimentation en combustible vers la pile à combustible (12), dans lequel il est exploité un premier système de refroidissement (30a) pour la pile à combustible (12) selon l'une des revendications 8 à 10 et/ou il est exploité un deuxième système de refroidissement (30b) pour l'évaporateur d'hydrogène (50) selon l'une des revendications 8 à 10.

13. Procédé de fonctionnement d'un système de pile à combustible (10) comprenant une pile à combustible (12) équipée d'un échangeur de chaleur (34) et un évaporateur d'hydrogène (50) équipé d'un échangeur de chaleur (52) dans une conduite (14) d'alimentation de la pile à combustible (12) en combustible, dans lequel il est exploité un système de refroidissement (30) commun à la pile à combustible (12) et à l'évaporateur d'hydrogène (50) selon l'une des revendications 8 à 10.
